# EUROPEAN PATENT APPLICATION

(11) **EP 2 157 103 A1**
(43) Date of publication of application: **24.02.2010**
(21) Application number: 08162560.0
(22) Date of filing: 18.08.2008
(51) Int. Cl.: C08B 1/00, C08B 16/00, C08L 1/02, C08L 97/02

(54) **Process for regenerating or derivatizing cellulose**

(71) Applicant: BIOeCON International Holding N.V., Curaçao (AN)
(72) Inventor: Moulijn, Jacob A., 2517 HB, 's Gravenhage (NL); Daamen, Sjoerd, 08017, Barcelona (ES); O'Connor, Paul, 3871 KM Hoevelaken (NL); Van der Meij, Rob, 3818 ZH Amersfoort (NL)
(74) Representative: Derks, Wilbert

(57) **Abstract**

A process is disclosed for regenerating or derivatizing cellulose. The process comprises the steps of providing a source of unrefined cellulose, and dissolving the unrefined cellulose in a molten inorganic salt.

The source of unrefined cellulose may be a biomass, such as wood.

The process permits the regeneration or derivatization of cellulose having a high degree of polymerization.

## Description

### BACKGROUND OF THE INVENTION

### 1. Field of the Invention

The present invention relates generally to a method for dissolving cellulose. More particularly, the present invention relates to a process for the preparation of a cellulose solution and to fibers formed from this solution.

### 2. Description of the Related Art

The main industrial process that involves use of a cellulose solution is the manufacture of shaped articles, such as films and fibers. The viscose process has been the principal method for the manufacture of regenerated cellulose fibers in the past. The viscose process consists of steeping cellulose sheets in sodium hydroxide, shredding the sheets, aging the shredded sheets to form alkali cellulose, treating the alkali cellulose with carbon disulfide to form a cellulose xanthate solution, ripening and filtering the solution, extruding the solution through the small holes of a spinneret into an acid coagulating bath to form filaments, stretching the filaments and then washing, drying and packaging the fibers.

Even at present, the principal cellulose dissolving method that is used on an industrial scale for the purpose of forming fibers is the viscose method and the regeneration of cellulose fibers from cuprammonium cellulose solution is also used to some extent. Both of these processes involve the formation of a cellulose derivative. Films and fibers can be formed from these cellulose derivatives via regeneration of the solution of the derivative into acidic aqueous medium. These processes, however, are costly due to the use of numerous steps involved in preparing satisfactory solutions for fiber or film regeneration, which steps require expensive equipment or require high temperatures or high pressures or both. Also, in the viscose process, carbon disulfide is required in the preparation of the cellulose xanthate solution. The carbon disulfide is not part of the final regenerated cellulose and its presence in the system contributes to environmental problems.

There are other known cellulose-dissolving methods using a metal complex, although these methods have not generally been utilized industrially. As the metal complex used for dissolving cellulose, Cadoxene (cadmium/ethylenediamine/alkali), Coxene (cobalt/ethylenediamine/alkali), Zincoxene (zinc/ethylenediamine/alkali), Nioxene (nickel/ethylenediamine/alkali) and EWNN (iron/tartaric acid/alkali) have been used. Methods utilizing a metal complex, however, are not superior to the viscose method or the cuprammonium method, because toxic components, such as heavy metals and amines, are used and these methods are disadvantageous from an economical viewpoint.

In order to overcome the defects of the known cellulose-dissolving methods, a method for dissolving cellulose directly in an organic solvent or inorganic solution has been sought for a substantial period of time. As a result, various methods have been developed and proposed. Most of these methods, however, use a complicated multi-component solvent system which is expensive, require high temperatures or high pressures or both, and none of these methods have yet been used in practice, primarily because of toxicity, explosiveness and difficulty in recovering the solvents. Moreover, these methods are similar to the viscose method or the cuprammonium method in that the cellulose is converted to a derivative which is then dissolved. For example, U.S. Pat. No. 4,097,666 to Johnson, et al. describes a method of using a solvent system consisting of dimethyl sulfoxide and paraformaldehyde to dissolve cellulose in the form of methylol cellulose. It is also known that it is possible to dissolve cellulose in the form of cellulose nitrate utilizing dimethylformamide and N.sub.2 O.sub.4. Solvent systems utilizing SO.sub.2 /amine and dimethylformamide/chloral have also been used to dissolve cellulose in the form of a derivative.

It is also known that if the degree of polymerization, hereinafter referred to as "DP" of cellulose is below about 20, the cellulose is soluble in an aqueous alkali solution and in hot dimethyl sulfoxide. However, cellulose fibers and films formed from such cellulose solutions do not have satisfactory properties and such cellulose solutions do not have a practical use for forming fibers and films. Apparently, the reason why low DP cellulose is soluble in an aqueous alkali solution is that the polymeric characteristics of cellulose, such as the molecular configuration defined by the hydrogen bond, is lost.

It is also known that an aqueous solution containing about 10 percent by weight of sodium hydroxide shows a strong swelling action for cellulose having a high degree of polymerization. It has been reported in the Journal of Prakt. Chem N.F. 158, 233 (1941) that natural cellulose, mercerized cellulose and regenerated cellulose are soluble in an aqueous 10 percent by weight solution of sodium hydroxide. Although the dissolving conditions and polymer concentrations are not described, it was reported that natural cellulose and mercerized cellulose are soluble for cellulose having a DP up to 400 and that regenerated cellulose is soluble if the DP is up to 1200. However, the text of this reference indicates that even a highly swollen gel is considered to be in the category of a "dissolved polymer".

U.S. Pat. No. 4,634,470 to Kamide, et al. reports substantial experiments based upon teachings provided by the Journal of Prakt. Chem. article. The Kamide, et al. patent indicates that it was found that the solubility of cellulose in an aqueous 10 percent by weight sodium hydroxide solution at -5.degree. C. to 5.degree. C. is influenced by the polymer concentration and the degree of polymerization. For example, it is reported that cellulose 5 dispersions, even at a cellulose concentration of 0.5 percent by weight in 10% sodium hydroxide, when subjected to centrifugal separation at 20,000 rpm for 46 minutes, proved that the cellulose is not completely dissolved. Accordingly, it is concluded in the Kamide, et al. patent that the term "soluble" used in the Journal of Prakt. Chem means that cellulose is dissolved at a very low concentration in the gel-containing state. Such a solution of a low concentration of cellulose is of no practical value. The Kamide, et al. patent indicates that low solubility of cellulose in sodium hydroxide is confirmed from the fact that an aqueous alkali solution was used for the fractional dissolution of celluloses. This fractional dissolution is an operation of separating cellulose into an alkali soluble portion and an alkali/insoluble portion, according to the molecular weight of the cellulose and the aggregation state of the molecular chains, and that the soluble portion includes a gel. These facts indicate that it is technically very difficult to dissolve substantially all of a cellulose having a high degree of polymerization at a high cellulose concentration in an aqueous alkali solution having a single alkali composition. A cellulose/alkali solution has not been utilized as a solution in the formation of fibers or films in the cellulose industry.

The Kamide, et al. patent is directed to a method for preparing a cellulose solution by maintaining a mixture comprising 100 parts of cellulose which may have any crystal form and 10 to 100 parts by weight of a hydrogen bond-cleaving solution at 100.degree. C. to 350.degree. C. under a pressure of 10 to 250 atmospheres for a period of time and promptly exposing the mixture to explosive decompression. The cellulose mixture is then mixed with an aqueous alkali solution maintained at a temperature not higher than 50.degree. C. The cellulose mixture is stirred at a temperature not higher than 10.degree. C. to dissolve the cellulose in the aqueous alkali solution. The hydrogen bond-cleaving agent can be water, an aqueous solution of an alkali, an aqueous solution of an inorganic acid, an aqueous solution of a salt, an aqueous solution of hydrogen peroxide, an aqueous solution of a urea compound, an aqueous solution or dispersion of an amphoteric oxide or amphoteric hydroxide, a glycol, an amide, a sulfoxide, a halogenated acetic acid and a polyphenol.

U.S. Pat. No. 4,302,252 to Turbak, et al. is directed to a method for dissolving cellulose wherein cellulose is activated by penetration of the cellulose with a polar medium and mixing at a temperature at which no significant degradation occurs with an amide selected from the group consisting of dimethylacetamide, 1-methyl-2-pyrrolidinone and mixtures thereof and from 3 to 15 percent by weight of lithium chloride. The cellulose is then dissolved in the amide and lithium chloride in the substantial absence of any polar medium other than the amide. It does not appear that the process taught in Turbak, et al. has been reduced to practice by industry since the issuance of the patent. This appears to be due to the expense associated with the lithium chloride required to practice the invention which makes the practice of the invention economically prohibitive.

US Patent 5,410,034 to Isogai et al. discloses the use of aqueous alkali solutions comprising from about 7% to about 12% of a strong base as a solvent for cellulose. Cellulose having a degree of polymerization of more than 350 requires a pretreatment. Examples of pretreatment methods include vigorous agitation with a concentrated solution (85%) of phosphoric acid or a concentrated solution (64% or 70%) of ZnCl₂, resulting in a swollen gel. The gel is subsequently dissolved in the alkaline solution.

The use of ionic liquids as replacements for conventional organic solvents in chemical, biochemical and separation processes has been demonstrated. Graenacher first suggested a process for the preparation of cellulose solutions by heating cellulose in a liquid N-alkylpyridinium or N-arylpyridinium chloride salt, U.S. Pat. No. 1,943,176, especially in the presence of a nitrogen-containing base such as pyridine. However, that finding seems to have been treated as a novelty of little practical value because the molten salt system was, at the time, somewhat esoteric. This original work was undertaken at a time when ionic liquids were essentially unknown and the application and value of ionic liquids as a class of solvents had not been realized.

US Patent 6,824,599 to Swatloski et al. discloses that cellulose can be dissolved in solvents that are described as ionic liquids that are substantially free of water, nitrogen-containing bases and other solvents. The Ionic Liquids have an organic cation.

US Patent Application Publication 2007/0006774 to Rogers et al. discloses a process for reconstituting cellulose from an Ionic Liquid solution. The disclosed Ionic Liquids all have organic cations.

In general, the prior art processes for dissolving cellulose use a refined form of cellulose, such as microcrystalline cellulose, as the starting material. The proposed solvents, in particular the Ionic Liquids, are expensive materials.

Thus, there is a need for a process for regenerating or derivatizing cellulose using a relatively inexpensive solvent. There is a further need for such a process in which unrefined forms of cellulose can be used. There is a particular need for a process in which a cellulose source may be used that further comprises hemicellulose and/or lignin.

### BRIEF SUMMARY OF THE INVENTION

The present invention addresses these problems by providing a process for regenerating or derivatizing cellulose, said process comprising the steps of: (i) providing a source of unrefined cellulose; (ii) dissolving the unrefined cellulose in a molten inorganic salt to form a cellulose solution; (iii) optionally, derivatizing the dissolved cellulose; and (iv) precipitating the cellulose or derivatized cellulose from the solution.

Another aspect of the invention comprises the use of a source of unrefined cellulose that further comprises hemicellulose and/or lignin. Particularly preferred is the use of a biomass material.

The process of the invention permits the use of cellulose feedstocks having a high degree of polymerization ("DP"). The cellulose is not significantly depolymerized by the process. Accordingly, regenerated cellulose and cellulose derivatives obtained by the process are generally characterized by a high DP.

The process provides, in another aspect of the invention, a convenient way of producing cellulose derivatives, such as cellulose esters and cellulose ethers.

### DESCRIPTION OF ILLUSTRATIVE EMBODIMENTS

The following is a description of certain embodiments of the invention, given by way of example only.

The process of the invention comprises the following steps:
(i) providing a source of unrefined cellulose;
(ii) dissolving the unrefined cellulose in a molten inorganic salt to form a cellulose solution;
(iii) optionally, derivatizing the dissolved cellulose; and
(iv) precipitating the cellulose or derivatized cellulose from the solution.

The use of unrefined cellulose is an attractive feature of the process, in that it avoids the cost of refining cellulose. The cellulose source may consist substantially of cellulose, as is the case with, for example, cotton linters. Importantly, the cellulose source may further comprise hemicellulose and/or lignin.

In a specific embodiment the cellulose source further comprises both hemicellulose and lignin. Such materials, generally referred to as lignocellulosic materials, are available in the form of biomass. The term "biomass" as used herein refers to plant material that has not been subjected to a chemical modification. The term includes materials that have been subjected to a physical treatment, such as drying or extraction. Thus, the term encompasses hay (which results from the drying of grasses); meal (which results from oil seeds after the oil has been removed), and such like materials. The term does not encompass materials that have undergone a chemical treatment, such as Kraft pulp.

Biomass cellulose sources are abundantly, and inexpensively, available as grasses, agricultural waste, and forestry waste. Grasses, such as switch grass, are being cultivated as energy crops. Examples of lignocellulosic agricultural waste materials include straw, corn husks, bagasse, and the like. Examples of forestry waste materials include wood chips, saw dust, and tree bark. It will be understood that wood crops may be cultivated for the specific purpose of providing a cellulose source for the present process. Wood from such plantations is included in the term "forestry waste" as used herein, in deviation from common use of the term "waste".

Wood is a particularly preferred biomass material for use as a cellulose source for the process of the invention.

The term "molten inorganic salt" as used herein refers to inorganic salt hydrates that are liquid at temperatures below about 120 °C. Preferred are inorganic salt hydrates that have a melting point of 100 °C or less; still more preferred are those having a melting point of 80°C or less. Examples are collected in Table I.

**TABLE I**

| **SALT HYDRATE** | **MELTING TEMPERATURE (°C)** |
|---|---|
| LiClO₃.3H₂O | 8 |
| K₂HPO₄.6 H₂O | 13 |
| KF.4 H₂O | 18 |
| ZnCl₂.x H₂O (x>2) | <20 |
| CaCl₂.6 H₂O | 29 |
| LiNO₃.3 H₂O | 29 |
| Na₂SO₄.10 H₂O | 32 |
| Na₂CO₃.10H₂O | 33 |
| KFe(SO₄)₂.12 H₂O | 33 |
| LiBr.2 H₂O | 34 |
| CaBr₂.6 H₂O | 34 |
| Zn(NO₃)₂.6 H₂O | 36 |
| Na₂HPO₄.12 H₂O | 36 |
| FeCl₃.6 H₂O | 37 |
| CaCl₂.4 H₂O | 39 |
| Ca(NO₃)₂.4 H₂O | 42 |
| KF.2 H₂O | 42 |
| Fe(NO₃)₃.9 H₂O | 47 |
| Na₂HPO₄.7 H₂O | 48 |
| Zn(NO₃)₂.2 H₂O | 55 |
| NaCH₃COO.3 H₂O | 58 |
| NaAl(SO₄)₂.12H₂O | 61 |
| Al(NO₃)₃.9 H₂O | 70 |
| LiCH₃COO.3 H₂O | 70 |
| Na₃PO₄.12 H₂O | 72 |
| Na₄P₂O₇.10 H₂O | 76 |
| Ba(OH)₂.8 H₂O | 78 |
| Al₂(SO₄)₃.18 H₂O | 88 |
| Sr(OH)₂.8 H₂O | 89 |
| Mg(NO₃)₂.6 H₂O | 89 |
| LiCl. H₂O | 99 |

Mixtures of salt hydrates are also suitable. Several ternary systems form eutectic mixtures with melting points well below those of each of the components.

Particularly preferred is ZnCl₂.x H₂O, wherein x>2.

For the process of the invention, the lipid-containing biomass material preferably is in a dry or semi-dry form. The term "dry" as used herein refers to biomass material that is substantially water-free. It will be understood that it is virtually impossible to dry biomass material to 0% water content without forming char. For the present purpose biomass is considered "dry" if it contains less than 10 wt% water.

The term "semi-dry" as used herein refers to biomass containing more than 10 wt% water, but having a moisture level low enough for the biomass to be free-flowing when its particle size is less than 5 cm. For many types of biomass this is the case if the water level is less than 35 wt%.

If necessary, the biomass material may be dried to bring it into the dry or semi-dry state. Drying may involve heating the drying mass, in order to accelerate the evaporation of water. If the biomass contains protein, however, care should be taken to avoid denaturation of the protein. In general, denaturation negatively affects the solubility of the protein in the ionic liquid medium.

Prior to dissolving the biomass material in the molten salt medium, it is desirable to reduce its particle size to less than 5 cm, preferably less than 5 mm, more preferably less than 1 mm. Any suitable particle size reduction step may be used, including milling, grinding, and the like.

Dissolution of the biomass material may be facilitated by heating and/or stirring. Protein as may be present in the biomass material tends to dissolve before it is denatured, so that dissolution temperatures may be employed that are, in the absence of ionic liquid, high enough to cause denaturation of the protein. In general, suitable temperatures are in the range of from 60 to 120 °C, temperatures between 70 and 90 °C being preferred.

It is desirable to remove lignin and/or hemicellulose from the solution prior to derivatizing or regenerating the cellulose.

Lignin does not dissolve in the molten salt medium, and may be separated from the solution by any suitable liquid/solid separation technique. Examples of suitable techniques include filtration, centrifugation, and combinations thereof. Lignin recovered from the process may be used as a fuel, or as a feedstock for conversion to valuable platform chemicals.

Hemicellulose is both more readily soluble and more reactive than cellulose. These properties can be used to effect a separation of the hemicellulose from the cellulose material. By lowering the temperature of the solution cellulose can be selectively precipitated from the solution, while the hemicellulose remains dissolved. This is preferably done after undissolved lignin has been removed. The precipitated cellulose can be separated from the dissolved hemicellulose by any suitable liquid/solid separation technique. Examples include filtration, centrifugation, and combinations thereof.

After the precipitated cellulose is separated from the hemicellulose solution it can be re-dissolved in the molten salt medium.

In another embodiment hemicellulose and cellulose are both kept in solution. The hemicellulose is selectively converted to a compound that is insoluble in the molten salt medium. This procedure makes use of the fact that hemicellulose is more reactive than cellulose. For example, the hemicellulose may be converted *in situ* to xylose by a selective hydrolysis. Xylose can be converted to a compound that is insoluble in the molten salt medium, using hydrogenation, hydrolysis, or the like. Alternatively, xylose may be removed from the solution by extraction or a water wash.

After removal of lignin and hemicellulose from the solution, the cellulose can be regenerated from the solution by reducing its solubility. This may be accomplished by any suitable technique, such as lowering the temperature of the solution, or adding a non-solvent to the solution. The term "non-solvent", as used herein, refers to a liquid in which cellulose is insoluble or poorly soluble. Water is an example of a non-solvent.

Cellulose may be recovered from the solution by introducing the solution into a bath containing a non-solvent, such as an aqueous liquid. For example, the solution may be extruded through a spinneret into an aqueous liquid, so that cellulose is obtained in the form of fibers. Alternatively, cellulose may be obtained in the form of a film, using techniques that are well known in the art.

An important feature of the process of the invention is its ability to utilize cellulose materials having a high degree of polymerization (DP). The terms "degree of polymerization" and "DP" refer to the average number of glucose units in the cellulose polymer. Native cellulose as present in plants or biomass may have a DP as high as 4000 or more. Refined cellulose tends to have a much lower DP. Microcrystalline cellulose available under the brand name Avicell, for example, has a DP of about 350.

The process of the invention makes it possible to use cellulose sources having a DP of at least 400, preferably at least 1200, more preferably at least 2000. The upper limit is determined by nature, and can be 4000 or higher.

Cellulose dissolved in a molten salt medium may be converted to glucose (i.e., a DP of 1) by addition of a strong acid to the solution. For the purpose of the present invention it is desirable to minimize the depolymerization of cellulose. Accordingly, the presence of acids in the solution should be avoided. It may be desirable to use a base or a buffer in the solution to further reduce the propensity of cellulose to depolymerize.

In general it is desirable to conduct the process so as to obtain a regenerated cellulose having a DP of at least 400, preferably of at least 1200, more preferably at least 2000.

In another embodiment the cellulose is converted into a cellulose derivative, such as a cellulose ether or a cellulose ester, in the optional step (iii) of the process. Reactions to form cellulose ethers and cellulose esters are well known to the skilled person.

In one embodiment of the process, the dissolved cellulose is converted in step (iii) into a cellulose ester selected from the group consisting of cellulose acetate, cellulose triacetate, nitrocellulose, and mixtures thereof.

In another embodiment of the process, the dissolved cellulose is converted in step (iii) into a cellulose ether selected from the group consisting of ethylcellulose, methylcellulose, hydroxypropylcellulose; carboxymethylcellulose; hydroxypropyl- methylcellulose; and mixtures thereof.

The invention further comprises the regenerated cellulose obtainable by the process of the invention.

The invention further comprises the derivatized cellulose obtainable by the process of the invention.

## Claims

1. A process for regenerating or derivatizing cellulose, said process comprising the steps of: (i) providing a source of unrefined cellulose; (ii) dissolving the unrefined cellulose in a molten inorganic salt to form a cellulose solution; (iii) optionally, derivatizing the dissolved cellulose; and (iv) precipitating the cellulose or derivatized cellulose from the solution.

2. The process of claim 1 wherein the source of unrefined cellulose further comprises hemicellulose and/or lignin.

3. The process of claim 2 wherein the source of unrefined cellulose comprises both hemicellulose and lignin.

4. The process of claim 3 wherein the source of unrefined cellulose is a biomass material.

5. The process of claim 4 wherein the biomass material is selected from the group consisting of grasses, agricultural waste, and forestry waste.

6. The process of claim 5 wherein the biomass material is wood.

7. The process of any one of the preceding claims wherein, prior to step (iv), lignin and/or hemicellulose are removed from the solution.

8. The process of claim 7 wherein lignin is removed from the solution by a liquid/solid separation technique.

9. The process of claim 8 wherein the liquid/solid separation technique comprises filtration, centrifugation, or a combination thereof.

10. The process of claim 7 wherein hemicellulose is selectively converted to a compound that is insoluble in the molten inorganic salt.

11. The process of claim 7 wherein hemicellulose is converted to xylose, and xylose is removed from the molten inorganic salt by extraction or washing.

12. The process of any one of the preceding claims wherein step (iv) comprises lowering the temperature of the solution.

13. The process of any one of claims 1 through 11 wherein step (iv) comprises introducing the solution into bath containing a non-solvent.

14. The process of claim 13 wherein the non-solvent is an aqueous liquid.

15. The process of claim 13 or 14 whereby the cellulose solution is introduced into the non-solvent bath by extrusion through a spinneret.

16. The process of any one of the preceding claims wherein the precipitated cellulose obtained in step (iv) has a degree of polymerization of at least 400.

17. The process of claim 16 wherein the precipitated cellulose obtained in step (iv) has a degree of polymerization of at least 1200.

18. The process of claim 17 wherein the precipitated cellulose obtained in step (iv) has a degree of polymerization of at least 2000.

19. The process of claim 1 wherein, in step (iii) the dissolved cellulose is converted into a cellulose ether or a cellulose ester.

20. The process of claim 19 wherein, in step (iii), the dissolved cellulose is converted into a cellulose ester selected from the group consisting of cellulose acetate, cellulose triacetate, nitrocellulose, and mixtures thereof.

21. The process of claim 19 wherein, in step (iii), the dissolved cellulose is converted into a cellulose ether selected from the group consisting of ethylcellulose, methylcellulose, hydroxypropylcellulose; carboxymethylcellulose; hydroxypropyl- methylcellulose; and mixtures thereof.

22. The regenerated cellulose obtainable by the process of any one of claims 1 through 18.

23. The derivatized cellulose obtainable by the process of any one of claims 1 through 11 and 19 through 21.
